# EUROPEAN PATENT APPLICATION

(11) **EP 0 645 093 A1**
(43) Date of publication of application: **29.03.1995**
(21) Application number: 94202752.5
(22) Date of filing: 26.09.1994
(51) Int. Cl.: A21C 9/08, B65G 33/04

(54) **A device for stepwise and positionally displacing of objects**

(30) Priority: 24.09.1993 NL 9301652
(71) Applicant: SASIB BAKERY HOLLAND N.V., NL-2401 LK Alphen a/d Rijn (NL)
(72) Inventor: van Eersel, Johannes Christoffel, NL-3351 RD Papendrecht (NL)
(74) Representative: Boelsma, Gerben Harm, Ir.

(57) **Abstract**

Device for the stepwise and positionedly displacement of objects (3) - which are in friction contact with a continuously moving conveyor - along a processing or treatment station. The positioning means are formed by at least one worm (7) that is rotatably mounted about an axis (8) parallel to the travelling direction and projects with its helical rib (10) into the conveying path of the objects (3) and fits between two successive windings of the rib (10), the upstream flank (10a) of the rib (10) being provided - at angularly (pitch angle α) spaced locations along the helix - with flattenings (11) that lie in planes that are perpendicular to the axis (8), said worm (7) being mounted to be intermittently driven - in angular steps α - in a direction opposite to the winding direction of the rib (10), in such a way, that the projecting part of the object will come to a standstill against a flank flattening (11) at the end of each angular step of the worm (7).

## Description

The invention relates to a device for the stepwise and positionedly displacement of objects - which are in friction contact with a continuously moving conveyor - along a processing or treatment station, blocking means being provided in the conveyance track of the objects, which blocking means are periodically active in successive object positions.

In the field of the conveyance objects it occurs that the individual objects from a continuously flow of such objects have to halt during a short time in a number of successive, exactly defined positions, so that longitudinally (i.e. in the conveying direction) spaced parts of the object may be successively processed or treated from a fixed processing or treating station.

An example of this is the stepwise filling of baking trays, which are supplied in a continuous flow to a filling station and are delivered after filling. Such baking trays comprise a series of cavities positioned one after the other as seen in the conveying direction, and the stepwise displacement of the baking tray must bring the cavities one after the other in a position directly under a filling opening in order to be filled. For this purpose the baking trays have to be displaced past the filling station within the filling zone in steps that correspond with the spacing of the successive cavities and to halt after each step in a well-defined position.

With a well-known device of the type above referred to, the periodically active blocking means are formed by lateral blocking members that are positioned along the conveying path and comprise an operative clamping part adapted to enter - at intervals determined by the desired steps - into the conveying track to laterally engage the respective object so as to cause the latter to halt for a short time, while the conveyor is moving on slippingly. In this manner it is very difficult to obtain exactly defined positions of the object (baking tray) in the successive treatment positions (filling positions). Moreover these well-known blocking means are susceptible for interference.

The present invention provides for a solution of this drawback, which consists therein, that the periodically active blocking means are formed by at least one worm, which is journalled about an axis parallel to the conveying direction and the helical rib of which projects into the conveying path of the objects to enter into engagement with a part that projects from one of these objections and fits between two successive windings of the helical rib, the upstream flank of the rib being provided at angularly (pitch angle α) spaced locations along the helix - with flattenings in planes that are perpendicular to the axis, said worm being mounted to be intermittently driven - in angular steps α - in a direction opposite to the winding direction of the rib, in such a way, that the projecting part of the object will come to a standstill against a flank flattening at the end of each angular step of the worm.

The flattenings of the rib of the worm are constituting step surfaces which take a fixed position in the conveying direction.

An object that halts with its projecting part engaging such a flattening, has automatically arrived in the desired well-defined position. The only condition to be fulfilled by the drive control of the worm is to secure, that each time the worm will come to a standstill with a next flattening in the stopping position. This condition may be easily fulfilled, because the flattenings extend through a certain arc, so that it will suffice when each time the worm will come to a standstill at an angular position within an angular area that corresponds with said arc length.

In a practical and preferred embodiment the angle α is 360°, so that the flattenings are aligned as seen in the conveying direction.

This embodiment, in wich the worm is driven in steps of one revolution, is particularly suitable for the stepwise displacement of baking trays (past a filling station) with which the pitch between the receiving cavities of the baking trays corresponds with the pitch of the worm. The forward or rearward frame edge of the baking trays may thereby function as a projecting part, that cooperates with the rib of the worm.

The invention will be hereinafter further described by way of example with reference to the drawing.
Fig. 1 shows a diagrammatic plan view of a conveyor track for baking trays, comprising two mutually parallel conveyor chains and a worm therebetween;
fig. 2 is a side view, partially in section according to line II-II, of the worm shown in fig. 1 and of a baking tray engaging the latter and
fig. 3 shows a perspective view of the worm.

The example shown in the drawing relates to the stepwise movement of a series of baking trays past a filling station, said baking trays being supplied on a conveying track and have each to be within the area of the filling station in a successive longitudinal positions so as to be successively filled along the entire length with dough pieces to be baked.

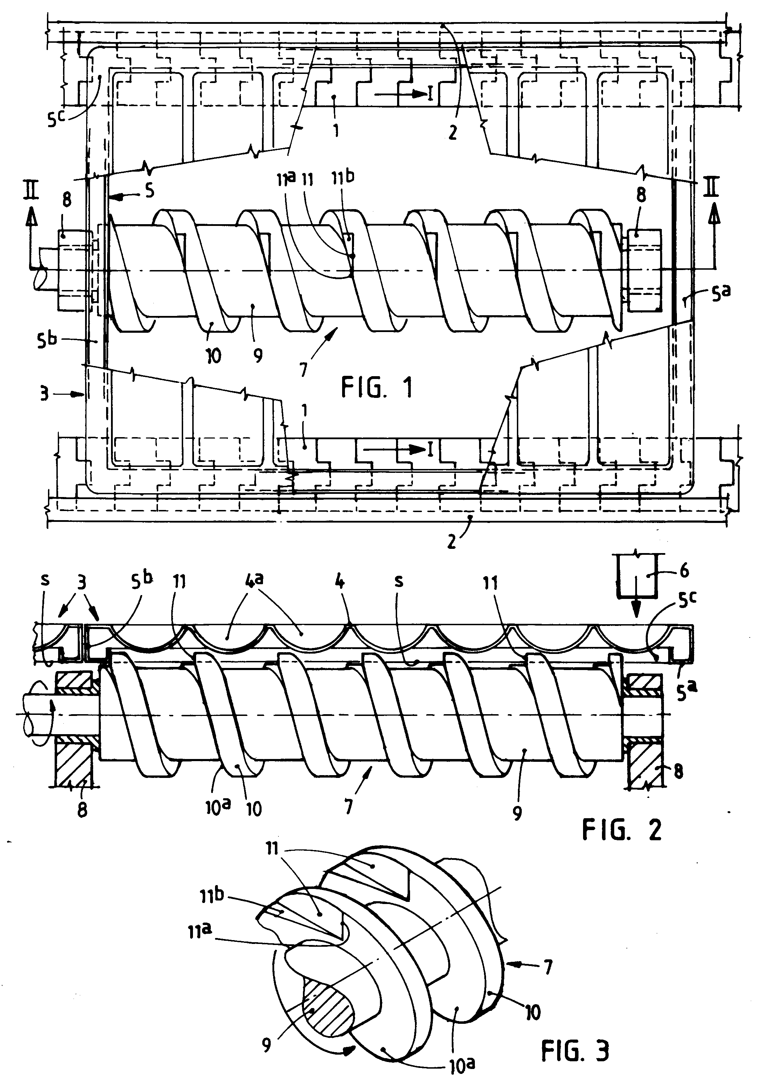

In fig. 1 1 designates the upper operative runs of two endless conveyor chains which are continuously driven in the direction of arrow I and function to move the baking trays 3 placed thereon. The conveying track constituted by the two conveyor chains is laterally confined by guide rails 2. The baking trays 3 comprise a mesh bottom 4 provided with receiving cavities 4a for the dough pieces to be baked, said cavities extending transversely to the travelling direction and are arranged side by side as seen in the travelling direction. The mesh bottom is carried by a rectangular frame 5 that is supported on the conveyor chains 1; the front and rear frame elements are indicated at 5a and 5b respectively, whereas parts of one of the lateral frame elements have been indicated at 5c.

In fig. 2 the line s diagrammatically represents the supporting surface, that is constituted by the upper surface of the operative runs 1 of the conveyor chains, while the filling station is diagrammatically shown at 6. Between the conveyor chains - in the area just upstream of the filling station 6 - a worm 7 is mounted for rotation about an axis parallel to the travelling direction I and supported in bearings that are schematically indicated at 8. The worm 7 comprises a cylindrical core 9 and a helical rib 10. The helical rib 10 is right-handed. The upper part of the rib 10 of the worm 7 is projecting upwardly beyond the supporting surface s. The upstream flank 10a of the rib is provided - at spaced locations along the helix - with flattenings 11 which lie in planes perpendicular to the axis 8.

In the example shown the flattenings 11 are obtained by intersecting the rib at the respective locations according to two mutually perpendicular planes, viz. on one hand the plane of the surface of the flattening which is directed perpendicular to the axis of the worm and intersects the rib 10 according to a radial line 11a, and on the other hand an axial plane perpendicular to the intersection line 11a resulting in the triangular surface 10b (vide particularly fig. 3).

In the example shown the angular spacing between the successive recesses is 360°, so that the flattings 11 are axially aligned.

The worm 7 is intermittently and anti-clockwise (vide the arrow direction) driven by a power source (not shown), e.g. an electromotor -reductor unit provided on the left end of the worm shaft.

The speed of the worm is selected in dependence of the (constant) speed of the conveyor chains 1 and preferably such, that there will be minimal slippage between the conveyor chains and the baking trays during rotation of the worm.

The periodical interruption and restart of the rotary movement of the worm 7 may be effected in a simple manner by means of a switch arm (not shown) which may be mounted e.g. on the right-hand end of the worm shaft and which coperates with a switching device provided in the rotary path of the arm. When the switch arm is adjusted in the correct angular position, the worm 7 will always cane to a standstill with the flattenings 11 in the upper positions.

In fig. 1 and 2 the baking tray 3 within the filling zone is shown at a moment at which its rear (upstream) frame element 5b the far upstream flattening 11. In this position the worm and the baking tray are at a standstill during a short time to permit the far downstream cavity 4a - which is positioned directly under the filling station 6 - to be filled. During this short period of standstill the conveyor chains slippingly passes below the baking tray 3, while a next baking tray will abut with its forward frame element against the rear frame element of the "blocked" baking tray.

It will be clear, that during the next rotary movement through 360° the baking tray 3 will enter with its rear frame element into the first space between two adjacent windings of the rib 10 and will be stopped at the end of said rotary movement against the next flattening 11. The baking tray 3 will then be in a position, in which the second cavity 4a (from the left) is located under the filling station 6. During the same rotary movement the forward (right hand as seen in the drawing) frame element of the next baking tray also enters into the said first space between the rib windings at the left in fig. 1 and 2.

In this way the baking tray under consideration will finally get with its far upstream cavity 4a under the filling opening 6 to become completely filled, after which the baking tray will - during the next rotary step - get (while completely filled) out of engagement with the worm and taken along by the conveyor chains 1.

In the same period of time the next baking tray will cane to a standstill due to its rearward frame element abutting against the far upstream flattening 11, so that the far right hand cavity 4a can be filled.

## Claims

1. A device for the stepwise and positionedly displacement of objects - which are in friction contact with a continuously moving conveyor - along a processing or treatment station, blocking means being provided in the conveyance track of the objects, which blocking means are periodically active in successive object positions, characterized in that the periodically active blocking means are formed by at least one worm, which is journalled about an axis parallel to the conveying direction and the helical rib of which projects into the conveying path of the objects to enter into engagement with a part that projects from one of these objections and fits between two successive windings of the helical rib, the upstream flank of the rib being provided - at angularly (pitch angle α) spaced locations along the helix - with flattens in planes that are perpendicular to the axis, said worm being mounted to be intermittently driven - in angular steps α - in a direction opposite to the winding direction of the rib, in such a way, that the projecting part of the object will come to a standstill against a flank flattening at the end of each angular step of the worm.

2. A device according to claim 1, characterized that the angle α is 360°, so that the flattens are aligned in the travelling direction.

3. A device according to claims 1-2, characterized in that the flattenings are obtained by locally recessing the rib, which is wound according to a regular helix.
